(19) Europäisches Patentamt
European Patent Office
Office européen des brevets

(11) Publication number : **0 457 564 A1**

(12) **EUROPEAN PATENT APPLICATION**

(21) Application number : **91304352.7**

(51) Int. Cl.$^5$ : **C08G 69/44**, C08G 63/68

(22) Date of filing : **15.05.91**

(30) Priority : **15.05.90 JP 124516/90**

(43) Date of publication of application : **21.11.91 Bulletin 91/47**

(84) Designated Contracting States : **AT BE CH DE DK ES FR GB GR IT LI LU NL SE**

(71) Applicant : **POLYPLASTICS CO. LTD.**
**3-13, Azuchicho, 2-chome**
**Chuo-Ku Osaka-shi Osaka 541 (JP)**

(72) Inventor : **Harashina, Hatsuhiko**
**885-11, Miyajima**
**Fuji-shi, Shizuoka (JP)**

(74) Representative : **Jackson, Peter et al**
**HYDE, HEIDE & O'DONNELL 10-12 Priests Bridge**
**London SW15 5JE (GB)**

(54) **Process for producing an aromatic polyester amide.**

(57) An aromatic polyester amide having improved durability at high temperatures is formed by reacting together :

[I] an alkanolamine represented by the general formula :

$$NH_2\text{-}R_1\text{-}OH \qquad (A)$$

(in which $R_1$ is an aliphatic or alicyclic divalent radical having 2 to 12 carbon atoms),

[II] an aromatic dicarboxylic acid or an ester-forming derivative thereof, and

[III] an aliphatic glycol, an aromatic alcohol having an aromatic diol group or an ester-forming derivative of the said glycol or alcohol

the reaction being conducted by heating the components I to III in the presence of a catalyst so as to effect amidation as well as esterification or transesterification, followed by polycondensation while distilling out excess monomers and eliminated components under reduced pressure.

EP 0 457 564 A1

The present invention relates to a new process for producing an aromatic polyester amide, and provides a material having excellent physical and mechanical properties, and particularly having durability with respect to high temperatures in that there is no reduction in physical properties with respect to its use at high temperatures for extended periods of time.

Thermoplastic polyester resins, and in particular, polyalkylene terephthalate resins such as polyethylene terephthalate and polybutylene terephthalate have superior mechanical, electrical and other physical and chemical properties. Moreover, for the additional reason of good processability, they are used as fibers and engineering plastics in a wide range of applications such as in automobile, electrical and electronic components.

On the other hand, polyamides, typically represented by nylon 6 and nylon 6.6, also possess excellent mechanical strength. These are used in the form of films and engineering plastics in a wide range of applications such as in the field of molded products.

However, these resins each have their respective faults. In order to reduce these faults while taking advantage of the merits of both esters and amides efforts have been made in the past to combine ester bonding and amide bonding based on the molecular structure of polymers. As an example of this, polyamide components have been copolymerized with polyester in order to give dye affinity and impact resistance to the polyester. In contrast, polyester components have been copolymerized with polyamide in order to improve the physical changes and low level of rigidity caused by the moisture absorption characteristic of polyamide.

However, although some types of the physical properties of these polyester amides were improved by such prior efforts, the improvements were inadequate for specific applications. They were especially inadequate with respect to high-temperature durability.

The present inventor discovered that by reacting a specified amount of a specific alkanolamine with an ordinary polyester-forming monomer in a polycondensation reaction, a highly practical polyester amide could be obtained that possessed excellent mechanical strength, impact resistance, heat resistance, hydrolysis resistance, flexibility and solvent resistance, while also having superior high temperature durability, without any loss of the excellent properties of the polyester.

Thus the present invention relates to a process for producing an aromatic polyester amide having a nitrogen content of 0.001-5 percent by weight in which:

[I] an alkanolamine represented by the general formula:

$$NH_2\text{-}R_1\text{-}OH \qquad (A)$$

(in which $R_I$ is an aliphatic or alicyclic divalent radical having 2-12 carbon atoms),

[II] an aromatic dicarboxylic acid or an ester-forming derivative thereof, and

[III] an aliphatic glycol, an aromatic alcohol having an aromatic diol group or an ester-forming derivative of the said glycol or alcohol

are allowed to react by heating in the presence of a catalyst to effect amidation as well as esterification or transesterification, followed by polycondensation while distilling out excess monomers and eliminated components under reduced pressure.

The polyester amide obtained from the present invention is an aromatic polyester amide possessing the structure in which small quantities of the amide units indicated in the general formulae (A') and/or (A") below are introduced into a main polymer chain consisting mainly of the polyester unit indicated in general formula (B) below:

$$\overset{\overset{O}{\|}}{C}-Ar-\overset{\overset{O}{\|}}{C}O-R_1-\overset{\overset{H}{|}}{N}-\overset{\overset{O}{\|}}{C}-Ar-\overset{\overset{O}{\|}}{C}-\overset{\overset{H}{|}}{N}-R_1-O- \qquad (A')$$

$$\overset{\overset{O}{\|}}{C}-Ar-\overset{\overset{O}{\|}}{C}-\overset{\overset{H}{|}}{R}\ -O- \qquad (A")$$

$$\overset{\overset{O}{\|}}{C}-Ar-\overset{\overset{O}{\|}}{C}-R_2-O- \qquad (B)$$

(in which $R_1$ corresponds to that of formula (A), Ar is a divalent aromatic radical corresponding to [II], and $R_2$ indicates a divalent aliphatic radical corresponding to [III]).

Although the inventor had previously proposed Japanese Utility Model Examined Publication No. 2-51426

with respect to said polyester amide and its production process, it was discovered in additional studies that by directly introducing an inexpensive alkanolamine into the reaction as one of the reaction components, the above high molecular weight polyester amide could be produced by an easier procedure while also having sufficiently economical properties, which led to the present invention.

The following provides a detailed description of the reaction components used in the production of the polyester amide of the present invention.

$R_1$ in formula (A) for the alkanolamine [I] indicates a divalent aliphatic or alicyclic radical having 2-12 carbon atoms. Examples of the said radical include ethylene, propylene, butylene, pentylene, hexamethylene, octamethylene, nonamethylene, decamethylene, dimethylmethylene and their substituted compounds, while example of the divalent alicyclic radical include cyclohexylene and its substituted compounds.

Typical examples of the alkanolamine compound represented in general formula (A) include 2-amino-1-ethanol, 3-amino-1-propanol, 4-amino-1-butanol, 5-amino-1-pentanol, 2-amino-1-propanol, 2-amino-1-butanol, 2-amino-2-methyl--1-propanol, 2-amino-3-methyl-3-methyl-1-butanol, 2-amino-1-pentanol, 1-dimethylamino-2-propanol, 3-dimethylamino-1-propanol, 2,2-dimethyl-3-aminopropanol and 4-aminocyclohexanol. From among these examples, 2-amino-1-ethanol and 3-amino-1-propanol are especially desirable in economic terms.

Components [II and [III] provide the aromatic polyester portion of the polymer of the present invention. Component [II] is mainly an aromatic dicarboxylic acid or its ester-forming derivative. Representative substances include terephthalic acid and 2,6-naphthalenedicarboxylic acid or their derivatives. In addition, depending on the particular case, isophthalic acid, dicarboxylic acids like phenylenedicarboxylic acid or their derivatives, dicarboxylic acids like adipic acid, sebacic acid and succinic acid or their ester-forming derivatives, and aromatic hydroxycarboxylic acids like hydrorybenzoic acid and hydroxynaphthoic acid or their ester-forming derivatives are used supplementarily.

Component [III] consists of mainly aliphatic glycol or its ester-forming derivative. Representative substances include low molecular weight glycols having 2 to 8 carbon atoms. Examples of these include diols such as ethylene glycol, 1,4-butylene glycol, 1,3-propanediol, 2-butene-1,4-diol, 1,6-hexanediol and 1,8-octanediol. In addition to these low molecular weight glycols, high molecular weight glycols such as polyalkyleneoxidoglycols can be used is combination. Examples of these include polyethyleneoxidoglycol and polybutyleneoxidoglycol.

In addition, aromatic alcohols such as bisphenol A, 4,4′-dihydroxybiphenyl and phosphinic acid having an aromatic diol group, alkylene oxide addition alcohols such as the ethylene oxide 2 mole addition product of bisphenol A and the propylene oxide 2 mole addition product of bisphenol A, polyhydroxy compounds such as glycerin and pentaerythritol, along with their ester-forming derivatives, can also be used supplementarily for component [III].

Moreover, combining the use of monomers having halogen--substituted groups, and especially bromine-substituted groups, in a portion of the components used for component [II] or [III] gives flame resistance to the said polyester amide.

Generally, if the amount of amide groups introduced into the polyester amide of the present invention is high, this frequently brings about coloring in the product while also resulting in low molecular weight. On the other hand, if the amount of introduced amide groups is low, the improvements that result from the effects of introduction of the amide groups are correspondingly lower.

Consequently, the suitable nitrogen content of the aromatic polyester amide of the present invention is 0.001 to 5 percent by weight, and preferably 0.005 to 2 percent by weight. This nitrogen content can be adjusted by increasing or decreasing the proportion of component [I] relative to the total amount of monomers.

The process for producing the polyester amide of the present invention can be performed in compliance with the polyester production methods of the past. In other words, after combining components [I], [II] and [III] as monomers, heating to roughly 150 to 300°C to effect amidation as well as esterification or transesterification, polycondensation is performed to obtain the polymer while distilling out excess monomers and eliminated components under reduced pressure.

The relative molar concentrations of the components used in this polycondensation are 90 to 300 moles of components [III], and preferably 95 to 200 moles, and 0.01 to 30 moles of component [I], and preferably 0.04 to 15 moles, to 100 moles of component [II].

The catalyst that is used at that time should be a catalyst, used either alone or in combination of two or more thereof, that is generally useful for polyester polycondensation. Examples include a tetraalkorytitanium such as tetrabutyoxytitanium, titanium oxalate metal salts such as potassium titanium oxalate, tin compounds such as dibutyl stannic oxide or dibutyl stannic laurate, acetic acid metal slats such as zinc acetate, lead acetate, manganese acetate or calcium acetate, and antimony compounds such as antimony trioxide.

The time at which component [I] is added in the polycondensation reaction is arbitrary. For example, it may

be added when either the esterification or transesterification reaction of components [II] and [III] is in progress or when a polyester of significant molecular weight has already been formed resulting from progression of the polycondensation reaction.

The structure of the polymer can be controlled by controlling the reaction of components [I] and [II] by dividing the addition of component [II] into several portions. For example, after adding an amount of component [II] corresponding to 0.5 to 2 moles to 1 mole of component [I] in advance, and then allowing the salt formation reaction (in the case component [II] is a carboxylic acid) or the amidation reaction (in the case component [II] is a carboxylic acid ester derivative) to proceed, the remaining components [II] and [III] may be mixed followed by the esterification or transesterification reaction and then polycondensation to yield the final polymer.

In this case, although the salt formation reaction or amidation reaction proceeds at a temperature of 30-150°C in the absence of catalyst, if component [III] is used as a solvent, the reaction becomes easy to control.

In order to increase the molecular weight of the polymer (including oligomers) obtained by fusion polymerization or solution polymerization, the step of solid phase polymerization is further included in the present invention. Solid phase polymerization may be performed in compliance with methods that are generally performed for polyesters, and processing should be performed for the required time at a high temperature within a range at which there is no fussion of particles contained in the vacuum or inert gas. Thus, the polyester amide of the present invention can be made to have a value of 0.4 to 3.0 for its intrinsic viscosity and possess the superior characteristics described earlier.

In order to give the polymer of the present invention further desired characteristics for its intended purpose, it can be used in combination with small amounts of other thermoplastic resins that are stable at high temperatures. Examples of these include olefin polymers, other amide polymers, ABS, polyphenyleneoxide, polyalkylacrylate, polyacetal, polysulfone, polyethersulfone, polyetherimide, polyetherketone and fluorine resins, or styrene, olefin, vinylchloride, urethane, ester or amide thermoplastic elastomers. If desired, two or more types of these thermoplastic resins may be used by mixing them together.

Other desired characteristics can be given to the polymer of the present invention by the use of other substances that are generally added to thermoplastic resins. These substances include stabilizers such as antioxidants and UV absorbents, antistatic agents, flame retardants, flame retardant assistants, coloring agents such as dyes and pigments, lubricants, mold release agents, plasticizers and crystallization promoters, crystal seeding agents and inorganic fillers may be used as components that are blended prior to molding either during or after polymerization.

Inorganic fillers include typical inorganic fibrous materials such as glass fiber, carbon fiber, ceramic fiber, boron fiber, potassium titanate fiber and asbestos, granular materials such as calcium carbonate, highly dispersed silicate, alumina, aluminium hydroxide, talc, clay, mica, glass flake, glass powder, glass beads, quartz powder, quartz sand, wollastonite, carbon black, barium sulphate, calcined gypsum, silicon carbide, alumina and boron nitrate, laminar inorganic compounds and whiskers.

One or more of these fillers may be used, in the form of a mixture as necessary, with glass fiber being one of the representative fillers. Moreover, there are also many cases in which this is used in combination with other granular and laminar fillers.

## Working Examples

The invention is further described with reference to the following non-limiting examples.

### Working Example 1

0.48 parts by weight of 2-amino-1-ethanol as component [I], 970 parts by weight of dimethylterephthalate as component [II], 513 parts by weight of 1,4-butanediol as component [III] and 0.7 parts by weight of tetrabutoxy-titanium as catalyst were placed in a reaction vessel equipped with a stirrer, nitrogen feeding tube and distillation tube, and stirred for 30 minutes at 160°C in a nitrogen atmosphere. The mixture was heated and stirred for 2 hours gradually raising the temperature to between 200 and 250°C. After disconnecting the supply of nitrogen, the pressure inside the reaction vessel was gradually reduced over 30 minutes to a pressure of 44 Pa (0.3 mmHg). The mixture was then stirred for 3 hours at this pressure. The polymer that was obtained displayed an intrinsic viscosity of 0.9, a nitrogen content of 0.020 percent by weight and other properties as indicated in Table 1.

### Working Example 2

The same procedure as that of Working Example 1 was performed with the exception of using 2.42 parts

by weight of 2-amino-1-ethanol as component [I]. The resultant polymer displayed an intrinsic viscosity of 0.8, a nitrogen content of 0.050 percent by weight and other properties as indicated in Table 1.

Working Example 3

The same procedure as that of Working Example 1 was performed with the exception of using 48.5 parts by weight of 2-amino-1-ethanol for component [I] and 1047 parts by weight of dimethylterphthalate for component [II]. The resultant polymer diplayed an intrinsic viscosity of 0.6 and had a nitrogen content of 0.953 percent by weight and other properties as indicated in Table 1.

Working Example 4

The same procedure as that of Working Example 1 was performed with the exception of using 2.68 parts by weight of 3-amino-1-propanol for component [I]. The resultant polymer diplayed an intrinsic viscosity of 0.8, a nitrogen content of 0.045 percent by weight and other properties as indicated in Table 1.

Working Example 5

2.42 parts by weight of 2-amino-1-ethanol as component [I], 3.85 parts by weight of dimethylisophthalate as component [II] and 513 parts by weight of 1,4-butanediol as component [III] were placed in a reaction vessel equipped with a stirrer, nitrogen feeding tube and distillation tube, and stirred for 1.5 hours at 120°C in a nitrogen atmosphere. The mixture was then stirred for 30 minutes at 160°C in a nitrogen atmosphere following the addition of 966 parts by weight of dimethylterephthalate as catalyst. The polycondensation reaction was then carried out in the same manner as in Working Example 1. The resultant polymer diplayed an intrinsic viscosity of 1.0, a nitrogen content of 0.051 percent by weight and other properties as indicated in Table 1.

Working Example 6

The same procedure was performed as in Working Example 5 with the exception of using 3.45 parts by weight of dimethyladipate in place of the dimethylisophthalate used in Working Example 5. The resultant polymer diplayed an intrinsic viscosity of 0.8, a nitrogen content of 0.049 percent by weight and other properties as indicated in Table 1.

Working Example 7

2.42 parts by weight of 2-amino-1-ethanol as component [I], 970 parts by weight of dimethylterephthalate as component [II], 730 parts weight of ethylene glycol as component [III] and 1.6 parts by weight of calcium acetate and 0.6 parts by weight of antimony trioxide as catalyst were placed in a reaction vessel equipped with a stirrer, nitrogen feeding tube and distillation tube, and stirred for 60 minutes at 180°C in a nitrogen atmosphere. The mixture was heated and stirred for 2 hours gradually raising the temperature to 200°C. The temperature was further raised to 220°C to distill off the excess ethylene glycol. After gradually increasing the temperature to 280°C together with discontinuing the introduction of nitrogen, the pressure inside the reaction vessel was gradually reduced over 30 minutes to a pressure of 67 Pa (0.5 mm Hg). The mixture was then stirred for 3 hours at this pressure. The resultant polymer diplayed an intrinsic viscosity of 0.8, a nitrogen content of 0.045 percent by weight and other properties as indicated in Table 1.

Comparative Example 1

The same procedure was performed as in Working Example 1 with the exception of omitting component [I]. The resultant polymer diplayed an intrinsic viscosity of 1.1 and other properties as indicated in Table 1.

Comparative Example 2

The same procedure was performed as in Working Example 7 with the exception of omitting component [I]. The resultant polymer diplayed an intrinsic viscosity of 0.9 and other properties as indicated in Table 1.

The measurement methods employed to evaluate the physical properties of the polymer molded products of the examples are indicated below.

(1) Tensile Strength and Elongation:

The tensile strength along with the initial elongation value as well as the amount of elongation after heating for 500 hours at 120°C were measured in accordance with ASTM D-638 (testpiece: ASTM IV, thickness: 1mm). The units employed for the results are $kg/cm^2$ ($1\ kg/cm^2 = 98.1$ kPa).

(2) Izod Impact Strength:

The notched Izod impact strength was measured in accordance with ASTM D-256. The units for this test are kg-cm/cm.

According to the method of the present invention, aromatic polyester amides can be produced both economically and easily using inexpensive alkanolamines. The polyester amides so produced possess excellent mechanical strength, impact resistance and flexibility, without any significant decrease in physical properties (especially flexibility) even if maintained at high temperatures for extended periods of time. They are especially well suited to use in electrical and electronic components and automobile parts, including such components as connectors, switches and coating materials (for wires etc.).

Table 1

| Polyester Amide | Intrinsic Viscosity | Nitrogen Content (wt.%) | Physical Properties: Tensile Strength (kg/cm²) | Physical Properties: Tensile Elongation (%): Initial Value | Physical Properties: Tensile Elongation (%): After 500 Hours at 120℃ | Physical Properties: Izod Impact Strength (Kg-cm/cm) |
|---|---|---|---|---|---|---|
| Working Example 1 | 0.9 | 0.010 | 574 | 217 | 95 | 3.0 |
| Working Example 2 | 0.8 | 0.050 | 583 | 230 | 125 | 3.2 |
| Working Example 3 | 0.6 | 0.953 | 495 | 239 | 161 | 3.1 |
| Working Example 4 | 0.8 | 0.045 | 575 | 232 | 129 | 3.2 |
| Working Example 5 | 1.0 | 0.051 | 589 | 235 | 136 | 3.4 |
| Working Example 6 | 0.8 | 0.049 | 568 | 222 | 117 | 3.1 |
| Working Example 7 | 0.8 | 0.056 | 503 | >300 | 238 | 3.5 |
| Comparative Example 1 | 1.1 | - | 562 | 221 | 32 | 2.6 |
| Comparative Example 2 | 0.9 | - | 434 | >300 | 90 | 3.1 |

## Claims

1. A process for producing an aromatic polyester amide having a nitrogen content of 0.001 to 5.0 percent by weight in which:
   [I] an alkanolamine represented by the general formula:
   $$NH_2\text{-}R_1\text{-}OH \qquad (A)$$
   (in which $R_1$ is an aliphatic or alicyclic divalent radical having 2 to 12 carbon atoms),
   [II] an aromatic dicarboxylic acid or an ester-forming derivative thereof, and
   [III] an aliphatic glycol, an aromatic alcohol having an aromatic diol group or an ester-forming derivative of the said glycol or alcohol
   are allowed to react by heating in the presence of a catalyst to effect amidation as well as esterification or transesterification, followed by polycondensation while distilling out excess monomers and eliminated components under reduced pressure.

2. A process as claimed in claim 1, in which the proportions of components [I] to [III] employed for the reaction are 90 - 300 moles of component [III] and 0.01 - 30 moles of component [I] to 100 moles of component [II].

3. A process as claimed in claim 2, in which the relative molar concentrations of components [I] to [III] employed for the reaction are 95 - 200 moles of component [III] and 0.04 - 15 moles of component [I] to 100 moles of component [II].

4. A process as claimed in any preceding claim, in which $R_1$ in the general formula (A) of the alkanolamine component [I] is an alkylene group having 2-10 carbon atoms or a cycloalkylene group having 5-12 carbon atoms.

5. A process as claimed in claim 4, in which the alkanolamine component [I] is selected from 2-amino-1-ethanol and 3-amino-1-propanol.

6. A process as claimed in any preceding claim, in which the acid or acid-derivative component [II] is selected from terephthalic acid, isophthalic acid, naphthalene-dicarboxylic acid, biphenylenedicarboxylic acid, ester-forming derivatives of the said acids and combinations of two or more of the said acids or derivatives thereof.

7. A process as claimed in any preceding claim, in which the diol component [III] is selected from aliphatic glycols having 8 carbon atoms or less and ester-forming derivatives of the said glycols.

8. An aromatic polyester amide having a nitrogen content of 0.001 to 5.0 percent by weight, obtained by reacting with one another the following components :
   [I] an alkanolamine represented by the general formula:
   $$NH_2\text{-}R_1\text{-}OH \qquad (A)$$
   (in which $R_1$ is an aliphatic or alicyclic divalent radical having 2 to 12 carbon atoms),
   [II] an aromatic dicarboxylic acid or an ester-forming derivative thereof, and
   [III] an aliphatic glycol, an aromatic alcohol having an aromatic diol group or an ester-forming derivative of the said glycol or alcohol.

9. An aromatic polyester amide having a nitrogen content of 0.001 to 5.0 percent by weight, and having a main chain consisting mainly of polyester units of the general formula

$$\overset{\displaystyle O}{\overset{\|}{C}}-Ar-\overset{\displaystyle O}{\overset{\|}{C}}-R_2-O- \qquad (B)$$

further comprises in the main chain a small quantity of amide units of the general formulae

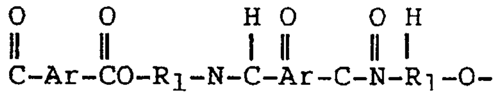 (A')

and

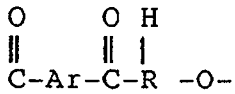 (A")

(in which formulae $R_1$ is an aliphatic or alicyclic divalent radical having 2 to 12 carbon atoms, Ar is a divalent aromatic radical and $R_2$ is a divalent aliphatic radical).

**10.** An aromatic polyester amide as claimed in claim 8 or claim 9, which has a nitrogen content of 0.005 to 2.0 percent by weight.

European Patent Office

# EUROPEAN SEARCH REPORT

Application Number

EP 91 30 4352

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPI, no. 74-84969v [49], Derwent Publications Ltd, London, GB; & JP-A-49 023 295 (ETHER CO.), (01-03-1974) ----- | 1-10 | C 08 G 69/44<br>C 08 G 63/68 |
| | | | TECHNICAL FIELDS SEARCHED (Int. Cl.5) |
| | | | C 08 G |

The present search report has been drawn up for all claims

| Place of search | Date of completion of the search | Examiner |
|---|---|---|
| THE HAGUE | 18-07-1991 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)